# EUROPÄISCHE PATENTSCHRIFT

(11) **EP 0 566 721 B1**
(45) Veröffentlichungstag und Bekanntmachung des Hinweises auf die Patenterteilung: **18.03.1998**
(21) Anmeldenummer: 92923427.6
(22) Anmeldetag: 12.11.1992
(51) Int. Cl.: C05G 1/00, C05D 3/02, A01C 1/06

(54) **BIOLOGISCH REINES DREI-PHASEN-NATURSTOFF-DÜNGEMITTEL UND VERFAHREN ZU SEINER HERSTELLUNG**
BIOLOGICALLY PURE, THREE-PHASE NATURAL FERTILIZER AND PROCESS FOR PRODUCING THE SAME
SUBSTANCE FERTILISANTE A BASE DE MATIERE NATURELLE EN TROIS PHASES BIOLOGIQUEMENT PURE ET SON PROCEDE DE FABRICATION

(30) Priorität: 12.11.1991 DE 4137171
(43) Veröffentlichungstag der Anmeldung: 27.10.1993
(73) Patentinhaber: AQUA FINA AG, 9490 Vaduz (LI)
(72) Erfinder: ITEN, Walter, 6404 Greppen (CH)
(74) Vertreter: Grättinger & Partner (GbR)
(86) Internationale Anmeldenummer: EP9202599
(87) Internationale Veröffentlichungsnummer: WO9310061

(56) Entgegenhaltungen:
- EP-A- 0 070 057
- EP-A- 0 125 440
- EP-A- 0 444 392
- DE-A- 2 501 092

## Beschreibung

Die Erfindung betrifft ein biologisch reines Drei-Phasen-Naturstoff-Düngemittel in Granulatform mit einem Gehalt an Kalk und Braunkohle.

Als Folge der mit der rasch wachsenden Bevölkerung der Erde ständig steigenden Intensivierung des landwirtschaftlichen und forstwirtschaftlichen Anbaus von Nutzpfanzen mit ständig steigenden Ernteerträgen verarmen die Nährböden immer mehr an den durch die abgeernteten Nutzpflanzen entzogenen mineralischen und biologischen Aufbaustoffen. Man versucht zwar, diesem ständig zunehmenden Mangel an Mineralstoffen und biologischen Nährstoffen durch Ausbringen von Düngemitteln zu begegnen. Diese zunehmende Anwendung von Düngemitteln bei ständig intensiviertem landwirtschaftlichem Anbau führt jedoch dazu, daß die ursprünglich vorhandene ausgewogene Mineral- und biologische Nährstofflage des Erdbodens immer stärker aus dem natürlichen Gleichgewicht kommt.

Diese als Folge des Ungleichgewichtes an Mineral- und biologischen Nährstoffen in den landwirtschaftlich und forstwirtschaftlich genutzten Erdböden in den Erntepflanzen auftretenden Mangelerscheinungen ziehen sich über die Nahrungskette zu dem damit gefütterten Nutzvieh hin bis zum Menschen, der sich mit den landwirtschaftlichen Produkten ernährt.

Alle bisher bekannten Düngemittel sind im wesentlichen darauf ausgerichtet, spezifische mineralische oder biologische Nährstoffe der jeweils damit bearbeiteten landwirtschafltichen Nutzfläüche zuzuführen, um einen örtlich auftretenden Mangel an diesen Stoffen auszugleichen. Diese bekannten Düngemittel sind überwiegend solche aus synthetischer Basis, die den Nachteil haben, daß sie nicht nur selbst keine ausgewogene Zusammensetzung an Mineralstoffen und biologischen Nährstoffen aufweisen, sondern auch das in landwirtschaftlich genutzten Erdböden bestehende Ungleichgewicht an Mineralstoffen und biologischen Nährstoffen noch weiter verstärken.

Bei einem bekannten Verfahren zur Herstellung eines kalk- und mikronährstoffhaltigen gekörnten Düngemittels (DE-A-2501092), das 35 bis 55 Gew.-% Kalk (als CaO) und als Rest Braunkohle sowie zusätzlich Mikronährstoffe aus der Gruppe Bor und Mangan enthält, liegt die Korngröße des bekannten Düngemittelgranulats zwischen 0,5 und 5 mm.

Damit wurde ein kalk- und mikronährstoffhaltiges gekörntes Düngemittel geschaffen, das es gestattet, unter Verwendung von Industrieabfallstoffen ohne Energiezufuhr ein kalk- sowie mikronährstoffreiches körniges Düngemittel herzustellen, dessen Nährstoffabgabe über einen längeren Zeitraum kontinuierlich erfolgt.

Ein bekanntes Präparat (EP-A-0070057) betrifft eine Zusammensetzung, die aus einem Agglomerat aus Torfteilchen besteht, und die als Bindemittel für die Torfteilchen ein Calcium-und/oder Magnesiumsalz mit einer Wasserlöslichkeit von weniger als 1 g/100 ml Wasser bei 20°C enthält. Der Mengenanteil des Calcium- und/oder Magnesiumsalzes beträgt 1 bis 25 Gew.-Teile, ausgedrückt als CaO oder MgO, pro Gew.-Teil Torffeststoff.

Ein Vorteil des bekannten Präparats besteht darin, daß die unlöslichen Salze frei von Düngemitteleigenschaften sein können und die nach diesem bekannten Verfahren hergestellten agglomerierten Torfteilchen daher als inerter Träger verwendet werden können. Erforderlichenfalls können aber auch Düngemittelsalze in Konzentrationen von 2 Gew.-% vorhanden sein.

Bei einem weiteren bekannten Verfahren zur Herstellung von Düngemitteln aus mineralischen und organischen Komponenten (EP-A-0444392) kann die mineralische Komponente bspw. Calcit, Zeolith oder Algenkalk sein, während die organische Komponente aus tierischen oder pflanzlichen Rückständen, Kompost, Traubentrester und dgl. besteht. Die Korngröße des aus dieser Druckschrift bekannten körnigen Düngemittels liegt zwischen 0 und 1 mm.

Schließlich ist es bekannt (EP-A-0125440), einen Naturdünger auf der Basis von Hühnermist durch Vermischen des Hühnermists mit Bentonitmehl und gebranntem Kalk herzustellen, wobei die beiden letzgenannten Stoffe etwa zu gleichen Teilen auf etwa 80 bis 88% Hühnermist entfallen.

Aufgabe der Erfindung war es demgegenüber, ein biologisch reines Naturstoff-Düngemittel zu schaffen, das nicht nur selbst eine ausgewogene Zusammensetzung an Mineralstoffen und biologischen Nährstoffen aufweist, sondern diese in drei Phasen dem damit behandelten landwirschaftlich genutzten Nährboden zuführt und dadurch dessen ursprünglich vorhandenes Gleichgewicht an Mineralstoffen und organischen Nährstoffen weitgehend wieder herstellt.

Es wurde nun gefunden, daß diese Aufgabe erfindungsgemäß gelöst werden kann mit einem biologisch reinen Drei-Phasen-Naturstoff-Düngemittel gemäß Anspruch 1, das im wesentlichen aus gemahlenem Magmagestein und gemahlener tertiärer Rohbraunkohle besteht. Nachdem es in Granulatform hergestellt worden ist, werden die Düngemittelkörnchen zusätzlich mit einem Überzug aus natürlichem Düngekalkmehl, insbesondere Muschelkalkmehl, versehen. Das Düngemittel ist somit in der Lage, nach dem Ausbringen auf den landwirtschaftlich genutzten Boden unter Ausnutzung der vorhandenen Feuchtigkeit diesem Mineralstoffe und biologische Nährstoffe in drei Phasen (Düngekalkmehl; Magmagesteinspulver; gemahlene tertiäre Rohbraunkohle) in ausgewogenem Verhältnis zuzuführen, so daß eine Wiederannäherung an den ursprünglichen Stoffgleichgewichtszustand im Erdboden erreicht wird.

Gemäß einer bevorzugten Ausgestaltung der Erfindung enthält die mineralische Komponente:
15 bis 35 Gew.-%, vorzugsweise 20 bis 30 Gew.-%, Calcit,
1 bis 15 Gew.-%, vorzugsweise 2 bis 5 Gew.-%, Dolomit,
5 bis 35 Gew.-%, vorzugsweise 10 bis 20 Gew.-%, Quarz,
1 bis 12 Gew.-%, vorzugsweise 2 bis 5 Gew.-%, Albit,
1 bis 15 Gew.-%, vorzugsweise 5 bis 10 Gew.-%, Illit,
1 bis 20 Gew.-%, vorzugsweise 2 bis 5 Gew.-%, K-Feldspat,
weniger als 6 Gew.-%, vorzugsweise weniger als 2 Gew.-%, Chlorit,
weniger als 5 Gew.-%, vorzugsweise weniger als 1 Gew.-%, Kaolinit und
weniger als 5 Gew.-%, vorzugsweise weniger als 1 Gew.-%, Montmorillonit.

Die organische Komponente besteht hauptsächlich aus Kohlehydraten, stickstoffhaltigen Verbindungen und Huminstoffen, insbesondere solchen aus der Gruppe Lignin, Cellulose, Pflanzenharze und Pflanzenwachse.

Die organische Komponente besteht zu 20 bis 40 Gew.-%, vorzugsweise zu etwa 1/3, aus einem Nährhumusanteil und zu 80 bis 60 Gew.-%, vorzugsweise zu etwa 2/3, aus einem Dauerhumusanteil.

Das erfindungsgemäße Düngemittel enthält außerdem vorzugsweise die folgenden Metall- und Metalloid-Spurenelemente, jeweils bezogen auf das Gesamtgewicht des Düngemittels:
28 bis 34 Gew.-ppm, vorzugsweise etwa 31 Gew.-ppm, Cu
71 bis 87 Gew.-ppm, vorzugsweise etwa 79 Gew.-ppm, Zn,
11 bis 13 Gew.-ppm, vorzugsweise etwa 12 Gew.-ppm, Pb,
31 bis 39 Gew.-ppm, vorzugsweise etwa 35 Gew.-ppm, Ni,
14 bis 18 Gew.-ppm, vorzugsweise etwa 16 Gew.-ppm, Co,
27 bis 33 Gew.-ppm, vorzugsweise etwa 30 Gew.-ppm, Mo,
52 bis 64 Gew.-ppm, vorzugsweise etwa 58 Gew.-ppm, Cr,
weniger als 4 Gew.-ppm, vorzugsweise weniger als 1 Gew.-ppm, Jod,
weniger als 6 Gew.-ppm, vorzugsweise weniger als 2 Gew.-ppm, Bor und
weniger als 0,6 Gew.-ppm, vorzugsweise weniger als 0,2 Gew.-ppm, Hg.

Das erfindungsgemäße Düngemittel ist außerdem dadurch gekennzeichnet, daß sein Gehalt an den wichtigsten Oxiden, bezogen auf das Gesamtgewicht des Düngemittels, beträgt:
14,15 Gew.-% Kohlendioxid
22,72 Gew.-% Siliciumdioxid
5,23 Gew.-% Aluminiumoxid
2,10 Gew.-% Ferrit (Fe₂O₃)
0,20 Gew.-% Titandioxid
20,25 Gew.-% Calciumoxid
1,73 Gew.-% Magnesiumoxid
0,19 Gew.-% Manganoxid (MnO)
0,95 Gew.-% Kaliumoxid
0,68 Gew.-% Natriumoxid und
0,13 Gew.-% Phosphoroxid (P₂O₅)
und außerdem enthält es unlösliche Sulfate, Spurenelemente und Huminstoffe.

Der pH-Wert des erfindungsgemäßen Düngemittels liegt vorzugsweise im alkalischen Bereich zwischen 7,5 und 8,0. Das erfindungsgemäße Düngemittel enthält keine Belastung durch Salze und Schadstoffe und ist im wesentlichen geruchsfrei. Mit dem erfindungsgemäßen Düngemittel ist es möglich,
a) einen raschen pH-Ausgleich des Bodenhaushalts herbeizuführen (Phase 1);
b) Humusnährstoffe mit gleichzeitiger vorteilhafter Bodenlockerung durch Sauerstoffzufuhr in den Boden einzubringen (Phase 2); und
c) den Böden Mineralien aus feinstem Gesteinsmehl, an denen die Böden verarmt sind, bereits in der allerersten Düngungsphase wieder zuzuführen (Phase 3).

Das von Hand oder maschinell auf die Oberfläche der Böden gestreute Granulat (in der Regel 1,5 kg/m² bzw. drei Handvoll pro Schritt) löst sich schon bei geringer Wasseraufnahme auf und verteilt sich leicht in dem Bodensubstrat. Wo das Bodensubstrat fehlt, bildet sich nach kurzer Anwendungszeit ein gesunder Nährboden.

Zur Erzielung einer optimalen Streudichte und damit einer optimalen Feinverteilung der Mineralien und Spurenelemente, wird das erfindungsgemäße Düngemittel zweckmäßig mit Sämaschinen 1 bis 2 cm tief in den vorbereiteten Boden eingezogen. Zur ersten Einarbeitung wird auf 1 Hektar Bodenfläche 1 Tonne Düngemittel-Granulat benötigt. Dabei ist es zweckmäßig, eine bevorstehende Regenperiode auszunutzen, da dann die Auflösung des erfindungsgemäßen Düngemittels rasch und vollständig erfolgt.

Wegen seines verhältnismäßig hohen Calcit-Gehaltes ist die Gewähr zur Erhöhung des pH-Wertes des damit behandelten Bodens der auf Äckern, Wiesen und Plantagen angelegten Begrünungen rasch gegeben. Durch die Rückgabe der wichtigen Spurenelemente und Mineralien zeigen sich sehr bald ein sattgrünes Blattwerk und saftiger Graswuchs. Dadurch ist es möglich, bereits nach der dritten Düngungsphase einen biologischen Mutterboden zu erhalten, der Pflanzen, Tieren und Menschen einen gesunden Lebensraum bietet. Es ist zweckmäßig, die Winter- und Frühjahrsnässe sowie die sommerliche Monsunzeit zur Düngung der vorbereiteten Ertragsboden auszunutzen.

Durch Verwendung des erfindungsgemäßen biologisch reinen Drei-Phasen-Naturstoff-Düngemittels ist es nicht nur möglich, ertragreiche Ernten zu erzielen, sondern auf damit gedüngten Böden auch gesundes Nutzvieh aufzuziehen, das der gesunden Ernährung des Menschen förderlich ist. Durch das nahrhafte Weiderfutter verliert das Nutzvieh seine Aggressivität und bringt seine volle Leistung in Milch und Fleisch. Damit ist es auch möglich, Stroh in der Qualität zu erzeugen, die benötigt wird, um eine artgerechte Tierhaltung in Stallungen zu erzielen.

Winzer, Obst- und Gemüsebauern können durch Verwendung des erfindungsgemäßen Düngemittels wieder aromareiche, vollwertige und gesunde Früchte erzeugen, wie sie vor Beginn der heute überwiegend noch herrschenden Bodenausbeutung erzeugt worden waren.

Die erfindungsgemäßen Düngemittel-Körnchen können außerdem zusätzlich Samen von Kulturpflanzen, die angebaut werden soll, oder Gras- und/oder Blumen-Samen in der gewünschten Menge, vorzugsweise in einer solchen Menge, daß auf jedes Düngemittelkörnchen 3 bis 10, insbesondere 4 bis 6, Samenkörner entfallen, enthalten.

Die Samen oder Samengemischesind vorzugsweise im Kern der Düngemittelkörnchen im Gemisch mit dem gemahlenen Magmagestein und/oder der gemahlenen tertiären Rohbraunkohle, enthalten. Sie werden vorzugsweise dem gemahlenen Magmagestein und/oder der gemahlenen tertiären Rohbraunkohle zugesetzt, bevor diese granuliert und mit einem Überzug aus natürlichem Düngekalkmehl, insbesondere Muschelkalkmehl, versehen werden.

Gegenstand der Erfindung ist ferner ein Verfahren zur Herstellung des vorstehend beschriebenen Düngemittels, das dadurch gekennzeichnet ist, daß man
a) die mineralische Komponente, vorzugsweise Magmagestein, bis auf eine Teilchengröße von 1 bis 20 µm, vorzugsweise 2 bis 10 µm, mahlt,
b) die organische Komponente, vorzugsweise tertiäre Rohbraunkohle, bis auf eine Teilchengröße von 10 bis 70 µm, vorzugsweise 20 bis 50 µm, mahlt,
c) das in der Stufe (a) erhaltene Produkt und das in der Stufe (b) erhaltene Produkt im Gewichtsverhältnis (50 bis 70) : (50 bis 30), vorzugsweise etwa 60 : etwa 40, in einer Mischtrommel bei Raumtemperatur mischt,
d) das in der Stufe (c) erhaltene Gemisch in eine Pelletier- bzw. Granuliertrommel oder in einen Pelletierbzw. Granulierteller mit einem darüber angeordneten Sieb überführt und der Pelletier- bzw. Granuliereinrichtung, die mit einer Geschwindigkeit von 30 bis 40, vorzugsweise etwa 30 UpM bei Raumtemperatur gedreht wird, innerhalb von etwa 5 min natürliches Düngekalkmehl, insbesondere Muschelkalkmehl, das bis auf eine Teilchengröße von 10 bis 20 µm, vorzugsweise 15 µm, gemahlen worden ist, in einer Menge von 5 bis 30 Gew.-%, vorzugsweise 8 bis 10 Gew.-%, bezogen auf die in der Stufe (c) erhaltene Düngemittelcharge, zusetzt,
e) das dabei erhaltene Granulat mit einer Teilchengröße von 5 bis 15 µm nach Rückführung der Übergrößen in die Mischtrommel der Stufe (c) zur Entfernung anhaftender Feuchtigkeit 4 bis 5 h lang auf Großsieben lagert und dann in Säcke abfüllt oder
f) das in der Stufe (d) erhaltene Granulat in einen Trommeltrockner mit Warmluftgebläse überführt unter gleichzeitiger Rückführung der Übergrößen in die Mischtrommel und das Granulat mit einer Teilchengröße von 5 bis 15 µm in dem Trommeltrockner etwa 5 min lang bei einer Umdrehungszahl von 30 bis 40 UpM und bei einer Temperatur von etwa 45 bis etwa 50°C trocknet und danach in Säcke abfüllt.

Das Mischen in der Trommel in der Stufe (c) wird vorzugsweise zuerst 1 min lang bei etwa 500 UpM und danach etwa 1 bis etwa 10 min lang bei etwa 200 bis etwa 500 UpM, jeweils bei Raumtemperatur, durchgeführt.

In der Stufe (c) und/oder (d) des vorstehend beschriebenen Verfahrens können gewünschtenfalls Samen von Kulturpflanzen, die angebaut werden sollen, Grassamen und/oder Blumensamen und dgl. in der gewünschten Menge zugesetzt werden. Es können auch Samengemische verschiedener Pflanzen verwendet werden. Der Samen wird vorzugsweise in einer solchen Menge zugegeben, daß 3 bis 10, insbesondere 4 bis 6 Samenkörner auf jedes Düngemittelkörnchen entfallen.

Die Erfindung wird nachstehend unter Bezugnahme auf die beiliegende Zeichnung näher erläutert. Es zeigen:

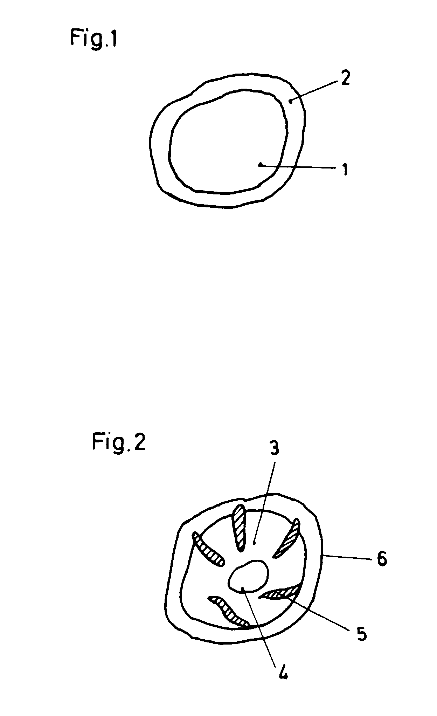

- Fig. 1: den Aufbau eines erfindungsgemäßen Düngemittel-Körnchens gemäß einer ersten Ausführungsform der Erfindung in schematischer Darstellung mit einem Kern 1, der besteht aus einem Gemisch aus gemahlenem Magmagestein und gemahlener tertiärer Rohbraunkohle und einem Überzug 2 aus natürlichem Düngekalkmehl, insbesondere Muschelkalkmehl; und
- Fig. 2: den Aufbau eines erfindungsgemäßen Düngemittel-Körnchens gemäß einer anderen Ausführungsform der Erfindung in schematischer Darstellung mit einem Kern, in dem die mineralische Phase 3 und die Braunkohlephase 4 voneinander getrennt vorliegen, und der außerdem Samenkörner 5 enthält, sowie einem Überzug 6 aus natürlichem Düngekalkmehl, insbesondere Muschelkalkmehl.

Bei der erfindungsgemäß verwendeten mineralischen Komponente handelt es sich um pulverisiertes Magmagestein, das durch die ständigen Erosionsverschiebungen nach der Vergletscherung des Quartärs vor 10 Millionen Jahren an die Oberfläche der Erdrinde gelangt ist. Diese Bodenvorkommen wurden erst vor etwa 10 Jahren entdeckt und erforscht.

Bei der erfindungsgemäß als organische Komponente verwendeten tertiären Rohbraunkohle handelt es sich um ein tertiäres Erosionsmaterial, das durch lange geologische Zeiträume hochwertiges Pflanzenmaterial immer weiter absinken ließ und nach Millionen von Jahren Umwandlungsprodukte erzeugte, die dem Fachmann als Humusstoffe oder Huminstoffe bekannt sind.

Huminstoffe sind organische Verbindungen, die für die Bodenentwicklung und besonders für die Bodenfruchtbarkeit von entscheidender Bedeutung sind. Die sich darin befindenden abgestorbenen Substanzen aus Pflanzen, Tieren und Mikroorganismen bilden den Nährhumus und werden von den lebenden Bodenorganismen rasch abgebaut.

Dem Nährhumus, zusammengesetzt aus Kohlehydraten und stickstoffhaltigen Verbindungen, fällt eine Reihe von Aufgaben zu. So dient er den Bodenorganismen als Nahrungsquelle und fördert dadurch die Bodenaktivität. Er liefert auch die Bausteine für den Aufbau des Dauerhumus, der wiederum aus Huminstoffen besteht. Diese Huminstoffe, die sehr komplizierte Strukturen aufweisen und hier als Sammelbegriff für eine Vielzahl von chemischen Verbindungen stehen, sind für die organische Substanz qualitätsbestimmend.

Der Dauerhumus ist im Vergleich zu Ton in der Lage, ein Vielfaches an Wasser und Nährstoffen aufzunehmen und zu binden. Er regelt außerdem den Aufbau und die Stabilisierung des Bodengefüges und sichert die Bindung des Bodenstickstoffs.

Mangelerscheinungen von Mineralien, Spurenelementen und Vitaminen, die in biologischen Lebensmitteln heute an der Tagesordnung sind, sind die Ursache für die meisten Erkrankungen und Leiden des Menschen.

Spurenelemente sind Katalysatoren und Regler von lebenswichtigen Prozessen, deren Wirkung nur in bestimmter Konzentration auftritt. Eine zu hohe Konzentration ist ebenso schädlich wie eine zu geringe Dosis. So führt der Mangel an Kupfer bei Obstbäumen zu einer Chlorose genannten Blässe der Blätter, einer Verzögerung der Blüte von Apfel- und Birnbäumen. Wenn diese Pflanzen gedeihen sollen, muß der Boden mindestens 2 g Kupfer auf 100 kg in Form von löslichen Salzen enthalten. Durch Einarbeiten des erfindungsgemäßen Düngemittels beispielsweise in einen ausgegrabenen Ring in eine Tiefe von etwa 5 cm im Abstand von 3 m um den Baum herum wird die Vitalität des Baums deutlich verbessert. Es sollte die Frühjahrsnässe im oder auf dem Boden ausgenutzt werden, um die Löslichkeit der Mineralien und Metalle zu gewährleisten.

Jedes Spurenelement entspricht einem Enzym, wobei ein Spurenelement gelegentlich durch ein anderes ersetzt werden kann, solange es analoge Eigenschaften hinsichtlich seiner Valenz und Ordnungszahl bzw. seines Atomgewichts hat. So können sich beispielsweise Magnesium, Mangan und Zink bei der Aktivierung verschiedener Phosphate mehr oder weniger bei einer Funktion vertreten, die sie erst ausüben, wenn sich die essentiellen Aminosäuren Alanin oder Cystidin gebildet haben.

Die Mineral-Makroelemente haben analoge Eigenschaften und treten unter gewissen Umständen in Wettbewerb zu den Spurenelementen. So kann beispielsweise Magnesium eine analoge Wirkung wie Calcium ausüben, Lithium kann analog zu Natrium wirken, während Rubidium wiederum analog zu Calcium und Magnesium wirken kann.

Spurenelemente können je nach Reaktion des Milieus (sauer oder basisch) mit überschüssigen Säuren oder Basen Komplexe bilden und die normale Reaktion (pH-Wert) von Geweben aufrechterhalten. Dies gilt beispielsweise insbesondere für Aluminium und Zink.

Wie bereits oben erwähnt, wird durch die Ausbeutung des Mutterbodens, durch Anbau von zu vielen Kulturen und durch zwangsläufige Verwendung von unausgewogenen künstlichen Düngemitteln das Mineralgleichgewicht des Bodens gestört und es entsteht ein verdichtetes, unfruchtbares Knetgefüge. Dieser kranke Boden ist nicht mehr aufnahmefähig und erzeugt vitaminarme Pflanzen, die Lebewesen, die sie verzehren, zwar sättigen, aber nicht ausreichend ernähren. Die Folge davon sind Vitaminmangelerkrankungen, die bei Menschen und Tieren auftreten. Diese machen sich unter anderem durch aggressives Verhalten und physische und psychische Störungen des Nervensystems bemerkbar.

So werden beispielsweise beim Getreideanbau durch die Kulturpflanzen reichlich Mineralien und Spurenelemente dem Mutterboden entzogen. Diese lebensnotwendigen Stoffe werden dann wieder zugeführt durch Düngemittel. Im Gegensatz zu den mit den bisher bekannten Düngemitteln erzielten Ergebnissen werden mit dem erfindungsgemäßen Düngemittel Getreidepflanzen erhalten, die ein wertvolles Korn aufweisen, da mit den erfindungsgemäßen Düngemitteln so wichtige Spurenelemente wie Kobalt, Kupfer, Mangan und Zink, die vor allem im Keim selbst und am äußeren Teil des Getreidekorn vorhanden sind, dem Boden wieder zugeführt werden.

Eine auf einem solchen Boden gewachsene Pflanze, die einen ausreichenden Anteil an Spurenelementen enthält, ist gegen Naturkrankheiten ihrer Artgenossen aus einem mit einem konventionellen Düngemittel gedüngten Nachbargebiet immun.

Mit dem erfindungsgemäßen biologisch reinen Düngemittel wird der Muttererde alles wieder zurückgegeben, was ihr durch den Anbau von Kuturpflanzen entzogen wurde, so daß der Erdboden sein natürliches Stoffgleichgewicht wiedererlangt. Besonders wichtig ist in diesem Zusammenhang die Ausnutzung der Regenfeuchtigkeit und der damit verbundenen Ruhephase, die bei Verwendung des erfindungsgemäßen Düngemittel-Granulats kräftige und gesunde Böden mit einem natürlichen Stoffgleichgewicht ergibt.

Das erfindungsgemäße Düngemittel "BIOHUMIN" wird vorzugsweise als Granulat verwendet (nachstehend als "BIOHUMIN-Granulat" bezeichnet). Seine Eigenschaften und technischen Vorteile lassen sich wie folgt zusammenfassen:
- Hauptbestandteil:: Huminstoffhaltige Weichbraunkohle und Mineralien
- Nebenbestandteil:: Organisch-mineralischer Wirtschaftsdünger
- Besondere Vorteile:: ca. 1/3 Nährhumus (Rohbraunkohle), ca. 2/3 Dauerhumus (im Huminstoffanteil)
(gemahlenes Urgestein). Keine Belastung durch Salze und Schadstoffe, geruchsfrei, umweltgerecht, granuliert, maschinelle Einbringung durch Ausstreuen, kein Einharken mehr nötig, daher kostensparend, viele Anwendungsmöglichkeiten: Begrünung von Müllkippen, Anlage von Rasenflächen, Anlage von Sport- und Spielflächen, Begrünung von Flächen, als Pflanzlochbeigabe, für Gärtner und Kleingärtner: Gemüse, Blumen, Sträucher, Bäume - für Baumschulen usw. Kostenmindernd: geringe Mengen alle zwei Jahre, kein zusätzlicher Kalk, weniger Dünger.
100 l BIOHUMIN-Granulat (95 kg) (pH 7,8) entsprechen, bezogen auf die organische Substanz, einem Ballen Torf (300 l Entnahmemenge).

### Anwendung von BIOHUMIN zu jeder Jahres- und Vegetationszeit:

- Die günstigste Wirkung wird durch Ausbringen im Frühjahr bzw. Herbst erzielt.
- Die Granulatform vereinfacht die Ausbringung: entweder von Hand aufstreuen oder bei größeren Flächen auch mit Düngerstreuer.
- Pro Quadratmeter etwa 60 - 80 g.
- Als Pflanzlochbeigabe besonders geeignet (1 Sack = 25 kg = 28 l pro Kubikmeter).

Für Gemüse, Intensivkulturen, Blumen, Zierpflanzen, Gehölze und Neuanlagen von Rasenflächen - für alle Böden, alle Pflanzen:

### BIOHUMIN-Granulat bringt doppelten Nutzen:

- Sorgt für kräftiges Wachstum, für erhöhte Ernteerträge, gesundes Obst und Gemüse und volle Blütenpracht.
- Sorgt für eine regelmäßige Nährstoffentfaltung, hält den Boden locker, verhindert Austrocknen und damit Rissebildung.

### Umweltgerecht:

- Keine Belastung durch Schadstoffe und Salze, geruchfrei, keinen Unkrautsamen enthaltend, kein zusätzlicher Aufwand an zusätzlichen Düngemitteln, kein zusätzlicher Aufwand betreffend Nachkalkung und keinen Einflüssen von umweltbelastenden Schadstoffen ausgesetzt.

Die leicht zersetzbaren und deshalb schnell wirkenden Kalk- und Nährhumussubstanzen fördern das Bodenleben und setzen bei ihrem Abbau im Boden Nährstoffe frei. Der größere Anteil besteht aus schwerer zersetzbaren Mineral- und Dauerhumussubstanzen, die für einen dauerhaften Ton-Humuskomplex sorgen, der die Nährstoffe bindet und pflanzenverfügbar macht. Damit werden auch die physikalischen Verhältnisse im Boden verbessert: Das Porenvolumen wird erhöht, die Luftzirkulation begünstigt und der Wasserhaushalt reguliert. So wird für eine langanhaltende Strukturverbesserung des Bodens gesorgt.

Eine solche Strukturverbesserung bringt besseren Pflanzenwuchs und reichere Ernteerträge. Durch die Granulatform läßt sich BIOHUMIN-Bodenverbesserer-Granulat leicht ausbringen und mit Wasser in den Boden einarbeiten. Das Ausbringen kann sowohl von Hand als auch maschinell mit Düngerstreuer in einfacher Weise durchgeführt werden.

Das BIOHUMIN-Granulat wird auf die Oberfläche gestreut und gut bewässert. Das BIOHUMIN-Granulat wird leicht gelöst und ins Erdreich geschwemmt. Das kann zu jeder Jahres- und Vegetationszeit geschehen. Die Regenzeit beeinflußt diesen Vorgang positiv.

Die Erhaltung und Verbesserung unseres Boden als Teil des Lebensraumes ist die wichtigste Aufgabe im Rahmen des Umweltschutzes. Eine Möglichkeit hierzu bietet die Verwendung von BIOHUMIN, wobei zwei Aspekte im Vordergrund stehen:

Die Umweltfreundlichkeit und die Wirtschaftlichkeit.

BIOHUMIN besteht zu einem wesentlichen Teil aus Braunkohle, die wiederum die für den Boden so wichtigen Huminstoffe enthält. Aus der bekannten Inkohlungsreihe Torf - Braunkohle - Steinkohle - Graphit - ist, wie gefunden wurde, gerade die Braunkohle als Bodenhilfsstoff besonders geeignet.

BIOHUMIN enthält im allgemeinen weniger Schwermetalle als die heutigen Pflanzen und wesentlich weniger als die heutigen Bodenmittelwerte.

Die Zusammensetzung von BIOHUMIN aus hochwertigem Kalk, Mineralstoffen und Huminen (ca. 1/3 Nährhumus und ca. 2/3 Dauerhumus) bedingt einerseits die gewünschte Beeinflussung der Bodenfruchtbarkeit und andererseits den wirtschaftlichen Einsatz von BIOHUMIN-Granulat.

BIOHUMIN - auch BIOHUMIN-Granulat genannt - hat die folgenden wirtschaftlichen Vorteile:
- Verwendung im 2-Jahres-Rhythmus
- niedriger Preis für die organische und mineralische Substanz, d.h. keine Nachkalkung erforderlich durch den günstigen pH-Wert und Einsparung von mineralischen und anderen Düngemitteln.

Die Eigenschaften von BIOHUMIN machen es vor allem in Verbindung mit Mist und Jauche zu einem wertvollen Düngemittelersatz.

Die Wirkungen des erfindungsgemäßen Produkts lassen sich insbesondere - ohne an eine Theorie gebunden zu sein - wie folgt erklären:

Die ökologischen Schäden unserer Landwirtschaft werden von Jahr zu Jahr verheerender und die Kosten zu deren Beseitigung explodieren. Die Intensivbewirtschaftung hat zu großen, schleppergerechten Ackerflächen und Forsten geführt. Die Landschaft wurde maßgeblich ausgeräumt; Hecken, Feldgehölze und viele über die Feldmark verstreute Biotope fielen der Rationalisierung zum Opfer. Bachläufe wurden begradigt. Heute findet man nur noch Zuckerrüben- und Getreidewüsten oder güllenstinkende Maisschläge.

Auf all diese Flächen werden immer mehr Düngemittel, Fungizide, Herbizide, Pestizide und Insektizide ausgebracht. Die Stickstoffmenge in den Böden hat sich seit 1950 versechsfacht, Kali- und Phosphatmengen haben sich verdoppelt und die Pflanzenschutzmittel vervielfacht. Die lebensnotwendigen Mikroorganismen, die den Humushaushalt steuern, wurden erstickt und nahezu ausgerottet, weil sie dem Überangebot an Giftstoffen nicht gewachsen sind. Anaerobe Mikroorganismen im Boden reichern sich an und werden so zu "Schädlingen" weil das natürliche Verhältnis in der Biosphäre gestört ist. Das Tier- und Pflanzenleben verarmt zusehends: Bereits in den 70iger Jahren galten 37% der Wirbeltiere, 38% der Schmetterlinge und hunderte Arten von Farn- und Blütenpflanzen als ausgestorben oder akut gefährdet. Ein gesundes Gleichgewicht von aeroben und anaeroben Mikroorganismen dagegen bewirkt einen optimalen Humusaufbau, der für einen vitalen Aufbau des Zellsaftes (Lebenssaft) der Pflanze verantwortlich und unerläßlich ist.

Kühe, Schweine und Hennen werden zu Tausenden auf engstem Raum zusammengepfercht. Die unnatürlichen Lebensbedingungen erfordern ständig höhere Beigaben von Beruhigungsmitteln zum wiederum meist unnatürlichen Futter. Die Tiere leben in einer permanenten Drogenszene.

Diese konzentrierte Tierhaltung hat Mist und Gülle von einem lebensnotwendigen organischen Düngemittel in eine naturbelastende Emmision verwandelt. Durch die Massenausrottung der Mikroorganismen im Boden verschwand allmählich der Humusvorrat und durch diesen Humusverlust verliert der Boden die Fähigkeit, Nährsalze, die in Mist und Gülle enthalten sind, festzuhalten und pflanzenverfügbar zu machen. Wo sich die Massentierhaltung und Intensivbewirtschaftung konzentriert, klagen immer mehr Menschen über gesundheitliche Schäden. Stickstoff- und Phosphatabschwemmungen überdüngen Bäche, Flüsse und Meere und vergiften das Grundwasser. Das Ergebnis all dieser Mechanismen ist der fade Geschmack unserer modernen, ernährungsarmen Nahrungsmittel.

Diese Zerstörung der Natur bis hin zur Erkrankung der Menschen wird vom Staat, einschließlich der EG, mit rund 27 Milliarden Mark (1990) bezuschußt. Das ist mehr als die gesamte Nettowertschöpfung der Landwirtschaft von rund 24 Milliarden Mark. Dabei sind noch wesentliche Teile der Kosten unberücksichtigt. Die Verbraucher zahlen in Form von staatlich garantierten, überhöhten Agrarpreisen noch einmal rund 15 Milliarden Mark; die Kosten der Trinkwasseraufbereitung, im wesentlichen der Denitrierung (Landwirtschaft), ergeben nochmals 8 Milliarden Mark. Trotz dieses gewalten Defizits werden die Schäden immer größer, solange die Einsicht fehlt, daß die Chemie in der Landwirtschaft versagt hat und weiterhin versagen wird. Kein Mensch vermag das Gleichgewicht in der Natur zu halten, außer mit Hilfe der Natur selbst.

### Biologisch reines Humusmineral zur Dekontamination vergifteter Böden und Gewässer und Verfahren zu seiner Herstellung.

Die Erfindung betrifft insbesondere ein biologisch reines Naturstoff-Granulat, das aus Urgesteinsmehlen als mineralischer Komponente und aus fetthaltiger Urerde (Rohbraunkohle) als organischer Komponente besteht und ein Verfahren zu dessen Herstellung.

Zwischen einem Organismus und dessen belebter und unbelebter Umwelt werden Stoffe und Energie ausgetauscht. Dabei können auch mechanische Einflüsse wie Beschattung oder mechanischer Druck auf andere Organismen auf den Austausch von Energie zurückgeführt werden. Beim Stoffaustausch, bei dem der Faktor "Energie" ebenfalls beteiligt ist, spielen Nähr- und Schadstoffe eine wichtige Rolle. Die Vielzahl der Stoffe, die offensichtlich keine Bedeutung für das Wachstum haben, sind für den Stoffaustausch unbedeutend. Die Einteilung der Stoffe in die Gruppen lebensnotwendige Nährstoffe, Begleitelemente und nicht lebensnotwendige Wirkstoffe sowie Schadstoffe hängt von ihrer Konzentration ab.

Es sind heute 16 chemische Elemente für die Pflanze als lebensnotwendig bekannt. Fehlt eines dieser 16 Elemente, so stirbt die Pflanze ab. Die meisten dieser Elemente werden in Form von mineralischen Nährsalzen aus dem Boden aufgenommen. Zwei Elemente werden direkt über das Wasser zugeführt und Kohlenstoff sowie Sauerstoff gelangen aus der Luft über das Blattwerk in die Pflanze. Dieser so einfach erscheinende Vorgang wird heute noch in vielen Forschungslaboratorien und im Felde untersucht. Die noch nicht im Detail bekannte Wasserversorgung der Pflanze beeinflußt ihrerseits die Nährstoffversorgung. Viele Nährstoffe werden im Wasserfluß von ihrem Lagerungsort zur Wurzeloberfläche und alle mineralischen Nährstoffe im Wasserfluß von der Wurzel zum Sproß transportiert. Die pflanzliche Wasserbeziehung beeinflußt die Öffnung der Stomata und damit die Photosynthese und die Biomassenbildung. Umgekehrt hängen pflanzliche Wasserbeziehungen wesentlich von der Pflanzenernährung ab. Diese wenigen Beispiele zeigen die enorme Komplexität dieses Interaktionssystems, das nur durch ein "lebendiges" Bodengefüge erreicht und erhalten werden kann.

### BIOHUMIN als reines Naturprodukt ohne synthetische Hilfsstoffe

Das den Gegenstand der Erfindung bildende Produkt ist ein biologisch reines Aufbaustoff-Granulat, das alle für die Pflanze notwendigen 16 Bausteine enthält und durch seine Verbindung von Humus- und Mineralkomplexen den Boden wiederbelebt und pflanzenverfügbar macht. Da die Rohbraunkohle fetthaltig ist, wirkt sie hydrophob.

Der Einsatz von Urgesteinsmehlen in der bisherigen Form führte zur Verdichtung des Oberbodens. Nachteilig ist die Ausbringung von Gesteinsmehlen in ihrem Handling; Staubmasken sind erforderlich und zudem wird der feine Staub kilometerweit in alle Richtungen verweht. Das Granulieren der Gesteinsmehle bewirkt zwar ein besseres Handling, hat jedoch den Nachteil eines zu hohen hydraulischen Bindemittelanteils.

Es ist auch bereits bekannt, Gesteinsmehle in Verbindung mit Zellstoffen, Holzmehlen oder alkalischen Klärschlämmen zu einem Granulat zu verarbeiten. Solche Verbindungen sind wohl organischer Herkunft und dienen im wesentlichen als Substrathilfe, weisen jedoch keinen oder zumindest nur einen spärlichen Anteil an Nährstoffen auf. Des weiteren ist zu beachten, daß sich Zellstoffe sowie Holzmehle negativ auf den Boden auswirken, da beide Substanzen einen hohen Säuregrad aufweisen und somit die Erosionsgefahr im Boden erhöhen. Weitaus gefährlicher noch ist die Verbindung von Steinmehlen mit Klärschlämmen jeglicher Art, sofern sie nicht von ihren Schwermetallgehalten befreit sind und das mikrobiologische Gleichgewicht eingestellt ist.

Zellstoffe, Holzmehle, Schnitzelholz, giftfreie Klärschlämme und Verbrennungsschlacken sind Stoffe, die selbst durch einen vernünftigen Bodenhilfsstoff erst einem natürlichen Verrottungsprozeß unterzogen werden müssen, bevor sie als Bodenersatzstoffe ihre Aufgabe erfüllen können.

Erstmalig ist es erfindungsgemäß möglich, mit geringem wirtschaftlichem Aufwand angereicherten Rohbraunkohlenstaub mit feinsten Mineralmehlen in einem Arbeitsablauf ohne Zwischentrocknung oder Endtrocknung zu granulieren. Zu dessen Bindung werden ausschließlich reine Naturextrakte benötigt, d.h. es wird gänzlich auf chemische Substanzen und auf die Zugabe von industriell erzeugtem Stickstoff verzichtet.

### BIOHUMIN als Alternative zu Düngemitteln und kontinuierlicher Humuslieferant

Es ist erfindungsgemäß möglich, mindestens dieselbe Wachstums-Wirkung zu erzielen, wie mit chemischen Düngemitteln, jedoch mit essentiellem und geschmacklichem Vorteil. Mit der Ausbringung des erfindungsgemäßen Granulats bilden sich während des Zersetzungsprozesses Millionen von Kleinstlebewesen, die den für das Pflanzenwachstum günstigen Garezustand des Bodens bewirken und das ökologische Gleichgewicht wieder herstellen. Mit diesem Schritt werden mehrere Nebeneffekte erzielt: eine Bodenauflockerung wid auf natürlichstem Wege erzielt, was zur Folge hat, daß eine Wasserspeicherung in der Bodengare selbst wieder möglich ist, ohne künstliche Substrate zu schaffen. Ist dieser natürliche Bodenzustand wieder erreicht, sind die durch die Mikroorganismen ständig neu aufgebauten Huminstoffe und Enzyme wieder in der Lage, Nährsalze im Boden festzuhalten, abzubauen und pflanzenverfügbar zu machen. Ein Ausschwemmen von Nitraten, Sulfaten, Phosphaten etc. ins Grundwasser kann in diesem gesunden Boden nicht mehr stattfinden.

### BIOHUMIN als Bodendekontamination

Die im erfindungsgemäßen Produkt enthaltenen Enzyme sorgen als Katalysatoren nicht nur dafür, daß sich Harnstoff der Gülle zersetzt, sondern sie verarbeiten nachweisbar auch die synthetischen Düngemittel Cyanamid und Dicyanamid. Lange Zeit war man der Meinung, daß es Metalle in der Erde sind, die diese Prozesse katalysieren. Es ist heute jedoch erwiesen, daß biologische Mechanismen diese Aufgabe bewerkstelligen, ohne daß man diese im einzelnen kennt. Die Biokatalysatoren setzen weitaus mehr verschiedene Substrate um als bisher angenommen. Es ist auch erwiesen, daß diese Enzyme Chemikalien verarbeiten, die im Normalfall gar nicht in der Natur vorkommen und trotzdem relativ rasch abgebaut werden.

### BIOHUMIN als Retorte für Saatgut

Im erfindungsgemäßen Granulat können gewünschtenfalls Pflanzensamen zugegeben werden. Erwiesenermaßen wächst, z.B. bei Gras- oder Rasensamen, die im BIOHUMIN integrierte Pflanze wesentlich schneller und kräftiger an, als die auf die Erde ausgestreuten Pflanzensamen. Hinzu kommt, daß bei der freien Aussaat vieles durch den Wind weggetragen wird, anderes von Vögeln gefressen und ein großer Teil des Saatguts durch Einbruch von Kälteeinflüssen verloren geht. Anders verhält sich das Saatgut im erfindungsgemäßen Granulat, worin alle für die Pflanze notwendigen Bausteine, insbesondere Mikroorganismen, enthalten sind. Das Saatgut keimt unter Umständen, unter denen dies sogar in freier Natur kaum möglich ist, d.h. das erfindungsgemäße Granulat dient sozusagen als Retorte für den Keimling.

### BIOHUMIN zur biologischen Selbstreinigung der Gewässer

Kläranlagen sind zwar vielfach vorhanden, reichen aber längst nicht mehr aus, der steigenden Wasserverseuchung unserer Wegwerfgesellschaft Herr zu werden. Eine Reinigung durch Filtration und immer mehr, Entkeimungen mit Hilfe von Chlor oder Ozon wegen des Bakteriengehaltes sind erforderlich, damit unser Wasser noch als Trinkwasser verwendet werden kann. Die Befreiung des Wassers von schädlichen Stoffen und Krankheitserregern im Wasserwerk vor Abgabe an das Netz der Wasserversorgung wird zunehmend komplexer.

Vor allem durch das Ansteigen des Stickstoff- und Phosphatgehaltes (auch aus Waschmitteln) nimmt die Vermehrung der Algen und Kleinlebewesen stark zu. Die Verwesung der absterbenden Algen ebenso wie der Abbau hereingeschwemmten organischen Abfalls verbraucht Sauerstoff. Schließlich kann der Sauerstoffgehalt so weit sinken, daß kein vollständiger Abbau der organischen Stoffe mehr möglich ist, sondern Faulschlammbildung erfolgt. Die Mikroorganismen (Algen, Protozoen, Pilze, Bakterien, Viren) vermehren sich in einseitiger Richtung, da die Umweltbedingungen entscheiden über die Artenvermehrung. Mikroorganismen sind chemisch sehr reaktionsfähig, d.h. sie vermehren sich schnell und sind mit ihrem Stoffwechsel sehr anpassungsfähig. Zahlreiche Artengattungen sind Krankheitserreger und lassen den Stoffwechselkreislauf durch Mineralisation in der Natur nicht mehr zu (Verhältnisstörung).

Damit geht die biologische Selbstreinigungskraft des Gewässers verloren, es kippt um. Aus einem klaren See wird eine stinkende Kloake. Gelingt es nicht, diesen Prozess unter Kontrolle zu bekommen, dann ist die Erstickung der Menschheit in ihrem unbewältigten Abfall für die Industrieländer eine ernstere Gefahr als die des Verhungerns infolge zu starken Bevölkerungswachstums. Dabei sind die erforderlichen Ausgaben zur Abwendung dieser Gefahr, gemessen an denen, die zum Schutz der Menschen voreinander aufgewendet weden, relativ gering.

Das erfindungsgemäße Granulat bewirkt eine Mineralisierung des Gewässers aufgrund seiner Humus- und Mineralienmischung. Es führt auf einfachste Weise zur Selbstreinigung der Binnengewässer.

Eine Sauerstoffbildung im Seebodenbereich erfolgt erst dann wieder, wenn das Gleichgewicht zwischen sauerstoffund stickstoffbildenden Pflanzen und Mikroorganismen wieder hergestellt ist. Mit anderen Worten, es muß eine Rekultivierung des Seebodens erfolgen, wonach die Natur selbst wieder imstande ist, dieses Gleichgewicht aufrechtzuerhalten. Durch die Verwendung von BIOHUMIN wird das biologische Gleichgewicht wieder hergestellt, das heißt, dem Granulat wird für die Gewässersanierung Seegrassamen zugeführt, die mit ihrem Anwachsen ständig neuen Sauerstoff produzieren können. Die im Granulat enthaltenen Biokatalysatoren werden durch die Sauerstoffproduktion lebensfähig und regeln den natürlichen Bakterienhaushalt. Die Anreichung des Grundwasserbodens mit BIOHUMIN ergibt eine Auflockerung und bewirkt die Befreiung des Tiefenwassers von Schwebestoffen. Fadenalgen bzw. stickstoffabhängige Algen, die verantwortlich sind für das Ertrinken von Fischen, lösen sich vom Seegrund ab und schwimmen als "Bleiche" über dem Seespiegel, so daß sie mit Netzen oder mit Hilfe von "Seekuh" abgeschöpft werden können. Es hat sich in der Praxis gezeigt, daß mit dem Anwachsen des eingebrachten Seegrases keine Fadenalgen mehr entstehen.

Zur Ausbringung der erfindungsgemäßen Granulate in die Gewässer dient vorzugsweise ein endloser Strumpf aus Juteoder Leinengewebe mit der Grundfläche einer EURO-Palette und einer Höhe von 20 mm bis 100 mm, vorzugsweise 30 mm bis 50 mm, und einer Maschenweite von 1 mm bis 10 mm, vorzugsweise 2 mm. Das Ausbeulen der Strumpfmatte wird mit Stegbandnähten verhindert. Die Strumpfmatten werden auf EURO-Paletten endlos aufgeschichtet und können mit Hilfe schwimmender Geräte (Schlepper, Seekuh) direkt im Bereich der inneren Uferzone ausgebracht werden.

### BIOHUMIN als Geruchshemmer in Kompost- und Kläranlagen

Die Verwesung absterbender Algen und von organischen Abfällen wurde weiter oben erläutert. Durch den Mangel an Sauerstoff erfolgt Faulschlammbildung, was zur Ausprägung anaerober Kompartimente und zur Entwicklung anaerober Mikroorganismen führt. Ausscheidungsprodukte dieser Mikroorganismen sind unter anderem Methan und Ethylen. Erfolgt die Zugabe von BIOHUMIN zu diesem Zeitpunkt, so verschwindet der üble Geruch mit relativ rascher Wirkung und zwar nicht weil es eine Substratwirkung hat, wie viele Biologen vermuten (dann wäre mit Ton dieselbe Wirkung möglich), sondern wegen der Biokatalysatoren bzw. der aeroben Mikroorganismen die den Abbau der Faulsubstanzen bewirken. Entsprechende Tests wurden mit großem Erfolg auf industrieller Basis an Kompostieranlagen durchgeführt.

## Patentansprüche

1. Biologisch reines Drei-Phasen-Naturstoff-Düngemittel in Granulatform mit einem Gehalt an Kalk und Braunkohle,
dadurch gekennzeichnet,
daß es besteht aus Düngemittel-Körnchen mit
a) einem Kern, der zu 50 bis 70 Gew.-% aus gemahlenem Magmagestein und zu 50 bis 30 Gew.-% aus gemahlener tertiärer Rohbraunkohle besteht, und
b) einem Überzug aus natürlichem Düngekalkmehl, insbesondere Muschelkalkmehl, in einer Menge entsprechend 5 bis 30 Gew.-% des Gesamtgewichts von mineralischer Komponente und organischer Komponente.

2. Düngemittel nach Anspruch 1,
dadurch gekennzeichnet,
daß es das Düngekalkmehl, insbesondere Muschelkalkmehl, in einer Menge von 8 bis 10 Gew.-% enthält.

3. Düngemittel nach Anspruch 1,
dadurch gekennzeichnet,
daß die mineralische Komponente enthält:
15 bis 35 Gew.-% Calcit
1 bis 15 Gew.-% Dolomit
5 bis 35 Gew.-% Quarz
1 bis 12 Gew.-% Albit
1 bis 15 Gew.-% Illit
1 bis 20 Gew.-% K-Feldspat
weniger als 6 Gew.-% Chlorit
weniger als 5 Gew.-% Kaolinit und
weniger als 5 Gew.-% Montmorillonit.

4. Düngemittel nach Anspruch 3,
dadurch gekennzeichnet,
daß die mineralische Komponente enthält:
20 bis 30 Gew.-% Calcit
2 bis 5 Gew.-% Dolomit
10 bis 20 Gew.-% Quarz
2 bis 5 Gew.-% Albit
5 bis 10 Gew.-% Illit
2 bis 5 Gew.-% K-Feldspat
weniger als 2 Gew.-% Chlorit
weniger als 1 Gew.-% Kaolinit und
weniger als 1 Gew.-% Montmorillonit.

5. Düngemittel nach Anspruch 1,
dadurch gekennzeichnet,
daß die organische Komponente umfaßt Kohlehydrate, stickstoffhaltige Verbindungen und Huminstoffe, insbesondere solche aus der Gruppe Lignin, Cellulose, Pflanzenharze und Pfanzenwachse.

6. Düngemittel nach Anspruch 1,
dadurch gekennzeichnet,
daß die organische Komponente zu 20 bis 40 Gew.-% aus einem Nährhumusanteil und zu 80 bis 60 Gew.-% aus einem Dauerhumusanteil besteht.

7. Düngemittel nach Anspruch 6,
dadurch gekennzeichnet,
daß die organische Komponente zu etwa 1/3 aus Nährhumusanteil und zu etwa 2/3 aus Dauerhumusanteil besteht.

8. Düngemittel nach Anspruch 1,
dadurch gekennzeichnet,
daß es die folgenden Metall- und Metalloid-Spurenelemente, bezogen auf das Gesamtgewicht des Düngemittels, enthält:
28 bis 34 Gew.-ppm Cu
71 bis 87 Gew.-ppm Zn
11 bis 13 Gew.-ppm Pb
31 bis 39 Gew.-ppm Ni
14 bis 18 Gew.-ppm Co
27 bis 33 Gew.-ppm Mo
52 bis 64 Gew.-ppm Cr
weniger als 4 Gew.-ppm Jod
weniger als 6 Gew.-ppm Bor und
weniger als 0,6 Gew.-ppm Hg.

9. Düngemittel nach Anspruch 8,
dadurch gekennzeichnet,
daß es die folgenden Metall- und Metalloid-Spurenelemente enthält:
etwa 31 Gew.-ppm Cu
etwa 79 Gew.-ppm Zn
etwa 12 Gew.-ppm Pb
etwa 35 Gew.-ppm Ni
etwa 16 Gew.-ppm Co
etwa 30 Gew.-ppm Mo
etwa 58 Gew.-ppm Cr
weniger als 1 Gew.-ppm Jod
weniger als 2 Gew.-ppm Bor und
weniger als 0,2 Gew.-ppm Hg.

10. Düngemittel nach Anspruch 1,
dadurch gekennzeichnet,
daß sein Gehalt an den wichtigsten Oxiden, bezogen auf das Gesamtgewicht des Düngemittels, beträgt:
14,15 Gew.-% Kohlendioxid
22,72 Gew.-% Siliciumdioxid
5,23 Gew.-% Aluminiumoxid
2,10 Gew.-% Ferrit (Fe₂O₃)
0,20 Gew.-% Titandioxid
20,25 Gew.-% Calciumoxid
1,73 Gew.-% Magnesiumoxid
0,19 Gew.-% Manganoxid (MnO)
0,95 Gew.-% Kaliumoxid
0,68 Gew.-% Natriumoxid und
0,13 Gew.-% Phosphoroxid (P₂O₅)
und daß es außerdem unlösliche Sulfate, Spurenelemente und Huminstoffe enthält.

11. Düngemittel nach Anspruch 1,
dadurch gekennzeichnet,
daß es zusätzlich Pflanzensamen enthält.

12. Düngemittel nach Anspruch 11,
dadurch gekennzeichnet,
daß es die Pflanzensamen vorzugsweise im Kern der Düngemittelkörnchen in einer solchen Menge enthält, daß im Durchschnitt 3 bis 10, vorzugsweise 4 bis 6 Samenkörner auf jedes Düngemittelkörnchen entfallen.

13. Verfahren zur Herstellung des Düngemittels nach einem der Ansprüche 1 bis 12,
dadurch gekennzeichnet,
daß man
a) die mineralische Komponente, vorzugsweise Magmagestein, bis auf eine Teilchengröße von 1 bis 20 µm, vorzugsweise 2 bis 10 µm, mahlt,
b) die organische Komponente, vorzugsweise tertiäre Rohbraunkohle, bis auf eine Teilchengröße von 10 bis 70 µm, vorzugsweise 20 bis 50 µm, mahlt,
c) das in der Stufe a) erhaltene Produkt und das in der Stufe b) erhaltene Produkt im Gewichtsverhältnis (50 bis 70) : (50 bis 30), vorzugsweise etwa 60 : etwa 40, in einer Mischtrommel bei Raumtemperatur mischt,
d) das in der Stufe c) erhaltene Gemisch in eine Pelletier- bzw. Granuliertrommel oder in einen Pelletier- bzw. Granulierteller mit einem darüber angeordneten Sieb überführt und der Pelletier- bzw. Granuliereinrichtung, die mit einer Geschwindigkeit von 30 bis 40, vorzugsweise etwa 30 UpM bei Raumtemperatur gedreht wird, innerhalb von etwa 30 min, vorzugseweise etwa 5 min, natürliches Düngekalkmehl, insbesondere Muschelkalkmehl, das bis auf eine Teilchengröße von 10 bis 20 µm, vorzugsweise 15 µm, gemahlen worden ist, in einer Menge von 5 bis 30 Gew.-%, vorzugsweise 8 bis 10 Gew.-%, bezogen auf die in der Stufe c) erhaltene Düngemittelcharge, zusetzt,
e) das dabei erhaltene Granulat mit einer Teilchengröße von 5 bis 15 mm nach Rückführung der Übergrößen in die Mischtrommel in der Stufe c) zur Entfernung anhaftender Feuchtigkeit 4 bis 5 h lang auf Großsieben lagert und dann in Säcke abfüllt oder
f) das in der Stufe d) erhaltene Granulat in einen Trommeltrockner mit Warmluftgebläse überführt unter gleichzeitiger Rückführung der Übergrößen in die Mischtrommel und das Granulat mit einer Teilchengröße von 5 bis 15 mm in dem Trommeltrockner 5 bis 20 min, vorzugsweise etwa 5 min lang bei einer Umdrehungszahl von 30 bis 40 UpM und bei einer Temperatur von etwa 45 bis etwa 50°C trocknet und danach in Säcke abfüllt.

14. Verfahren nach Anspruch 13,
dadurch gekennzeichnet,
daß das Mischen in der Mischtrommel in der Stufe c) zuerst 1 min lang bei etwa 500 UmP und danach etwa 1 bis etwa 10 min lang bei etwa 200 bis etwa 500 UpM, jeweils bei Raumtemperatur, durchgeführt wird.

15. Verfahren nach Anspruch 13,
dadurch gekennzeichnet,
daß in der Stufe c) und/oder d) Pflanzensamen oder Pflanzensamengemische in einer solchen Menge zugegeben werden, daß in den fertigen Düngemittelkörnchen durchschnittlich 3 bis 10, vorzugsweise 4 bis 6 Samenkörner enthalten sind.

## Claims

1. Biologically pure three-phase natural substance fertilizer in the form of granulated material with a content of lime and lignite, characterized in that it consists of fertilizer granules with
a) a core, which consists of up to 50 to 70% by weight of ground magma rock and up to 50 to 30% by weight of ground tertiary crude lignite and
b) a covering of natural manuring lime powder, in particular shell lime powder, in a quantity corresponding to 5 to 30% by weight of the total weight of mineral components and organic components.

2. Fertilizer according to Claim 1, characterized in that it contains the fertilizing lime powder, in particular shell lime powder, in a quantity of 8 to 10% by weight.

3. Fertilizer according to Claim 1, characterized in that the mineral component contains:
15 to 35% by weight calcite
1 to 15% by weight dolomite
5 to 35% by weight quartz
1 to 12% by weight albite
1 to 15% by weight illite
1 to 20% by weight K-feldspar
less than 6% by weight chlorite
less than 5% by weight kaolinite and
less than 5% by weight montmorillonite.

4. Fertilizer according to Claim 3, characterized in that the mineral component contains:
20 to 30% by weight calcite
2 to 5% by weight dolomite
10 to 20% by weight quartz
2 to 5% by weight albite
5 to 10% by weight illite
2 to 5% by weight K-feldspar
less than 2% by weight chlorite
less than 1% by weight kaolinite and
less than 1% by weight montmorillonite.

5. Fertilizer according to Claim 1, characterized in that the organic component comprises carbohydrates, compounds containing nitrogen and humic substances, in particular those from the group lignin, cellulose, vegetable resins and vegetable waxes.

6. Fertilizer according to Claim 1, characterized in that the organic component consists of up to 20 to 40% by weight of a nutrient humus constituent and up to 80 to 60% by weight of a permanent humus constituent.

7. Fertilizer according to Claim 6, characterized in that the organic component consists of approximately one third nutrient humus constituent and of approximately two thirds permanent humus constituent.

8. Fertilizer according to Claim 1, characterized in that it contains the following metal and metalloid trace elements, with respect to the total weight of the fertilizer:
28 to 34 ppm by weight Cu
71 to 87 ppm by weight Zn
11 to 13 ppm by weight Pb
31 to 39 ppm by weight Ni
14 to 18 ppm by weight Co
27 to 33 ppm by weight Mo
52 to 64 ppm by weight Cr
less than 4 ppm by weight iodine
less than 6 ppm by weight boron and
less than 0.6 ppm by weight Hg.

9. Fertilizer according to Claim 8, characterized in that it contains the following metal and metalloid trace elements: approximately 31 ppm by weight Cu
approximately 79 ppm by weight Zn
approximately 12 ppm by weight Pb
approximately 35 ppm by weight Ni
approximately 16 ppm by weight Co
approximately 30 ppm by weight Mo
approximately 58 ppm by weight Cr
less than 1 ppm by weight iodine
less than 2 ppm by weight boron and
less than 0.2 ppm by weight Hg.

10. Fertilizer according to Claim 1, characterized in that its content of the most important oxides, with respect to the total weight of the fertilizer, amounts to:
14.15% by weight carbon dioxide
22.72% by weight silicon dioxide
5.23% by weight aluminium oxide
2.10% by weight ferrite (Fe₂O₃)
0.20% by weight titanium dioxide
20.25% by weight calcium oxide
1.73% by weight magnesium oxide
0.19% by weight manganese oxide (MnO)
0.95% by weight potassium oxide
0.68% by weight sodium oxide and
0.13% by weight phosphorous oxide (P₂O₅)
and that it furthermore contains insoluble sulphates, trace elements and humic substances.

11. Fertilizer according to Claim 1, characterized in that it additionally contains plant seeds.

12. Fertilizer according to Claim 11, characterized in that it contains the plant seeds preferably in the core of the fertilizer granules in such a quantity that on average 3 to 10, preferably 4 to 6 seeds are contained on each fertilizer granule.

13. Method for producing the fertilizer according to one of Claims 1 to 12, characterized in that one
a) grinds the mineral component preferably magma rock, to a particle size of 1 to 20 µm, preferably 2 to 10 µm,
b) grinds the organic component, preferably tertiary crude lignite, to a particle size of 10 to 70 µm, preferably 20 to 50 µm,
c) mixes the product obtained in stage a) and the product obtained in stage b) in a weight ratio of (50 to 70):(50 to 30), preferably approximately 60:approximately 40, in a mixing drum at room temperature,
d) transfers the mixture obtained in stage c) into a pelletizing or granulating drum or into a pelletizing or granulating dish with a sieve located thereabove and adds to the pelletizing or granulating device, which is rotated at a speed of 30 to 40, preferably approximately 30 rpm at room temperature, within approximately 30 minutes, preferably approximately 5 minutes, natural fertilizing lime powder, in particular shell lime powder, which has been ground to a particle size of 10 to 20 µm, preferably 15 µm, in a quantity of 5 to 30% by weight, preferably 8 to 10% by weight, with respect to the fertilizer batch obtained in stage c),
e) stores the granulated material obtained in this way, with a particle size of 5 to 15 mm, after returning the oversized particles to the mixing drum in stage c) for removing adhering moisture, for four to five hours on large sieves and then introduces it into sacks or
f) transfers the granulated material obtained in stage d) into a drum drier with a hot-air fan with simultaneous return of the oversized particles to the mixing drum and dries the granulated material with a particle size of 5 to 15 mm in the drum drier for 5 to 20 minutes, preferably approximately 5 minutes, at a rotary speed of 30 to 40 rpm and at a temperature of approximately 45 to approximately 50°C and then introduces it into sacks.

14. Method according to Claim 13, characterized in that the mixing in the mixing drum in stage c) is first of all carried out for one minute at approximately 500 rpm and then for approximately 1 to approximately 10 minutes at approximately 200 to approximately 500 rpm, in each case at room temperature.

15. Method according to Claim 13, characterized in that in stage c) and/or d) plant seeds or plant seed mixtures are added in such a quantity that in the finished fertilizer granules on average 3 to 10, preferably 4 to 6 seeds are contained.

## Revendications

1. Engrais naturel biologiquement pur à trois phases sous forme de granules contenant de la chaux et de la lignite, caractérisé en ce qu'il est constitué de granules d'engrais présentant
a) un noyau composé de 50 à 70 % en poids de roche volcanique broyée et de 50 à 30 % en poids de lignite du tertiaire broyée, et
b) un enrobage d'engrais calcaire naturel en poudre, en particulier de calcaire coquillier en poudre, en une quantité correspondant à 5 - 30 % en poids de la somme du composant organique et du composant minéral.

2. Engrais conforme à la revendication 1, caractérisé en ce qu'il contient de 8 à 10 % en poids d'engrais calcaire en poudre, en particulier de calcaire coquillier en poudre.

3. Engrais conforme à la revendication 1, caractérisé en ce que le composant minéral contient
de 15 à 35 % en poids de calcite,
de 1 à 15 % en poids de dolomite,
de 5 à 35 % en poids de quartz,
de 1 à 12 % en poids d'albite,
de 1 à 15 % en poids d'illite,
de 1 à 20 % en poids de feldspath potassique,
moins de 6 % en poids de chlorite,
moins de 5 % en poids de kaolinite et
moins de 5 % en poids de montmorillonite.

4. Engrais conforme à la revendication 3, caractérisé en ce que le composant minéral contient
de 20 à 30 % en poids de calcite,
de 2 à 5 % en poids de dolomite,
de 10 à 20 % en poids de quartz,
de 2 à 5 % en poids d'albite,
de 5 à 10 % en poids d'illite,
de 2 à 5 % en poids de feldspath potassique,
moins de 2 % en poids de chlorite,
moins de 1 % en poids de kaolinite et
moins de 1 % en poids de montmorillonite.

5. Engrais conforme à la revendication 1, caractérisé en ce que le composant organique comprend des hydrates de carbone, des composés azotés et des substances humiques, choisis en particulier parmi la lignine, la cellulose, les résines végétales et les cires végétales.

6. Engrais conforme à la revendication 1, caractérisé en ce que le composant organique est constitué pour 20 à 40 % en poids d'une fraction d'humus nutritif et pour 80 à 60 % en poids d'une fraction d'humus permanent.

7. Engrais conforme à la revendication 6 caractérisé en ce que le composant organique est constitué pour environ 1/3 d'une fraction d'humus nutritif et pour environ 2/3 d'une fraction d'humus permanent.

8. Engrais conforme à la revendication 1, caractérisé en ce qu'il contient les oligoéléments métalliques et métalloïdes suivants en les quantités suivantes rapportées au poids total de l'engrais :
de 28 à 34 ppm en poids de Cu,
de 71 à 87 ppm en poids de Zn,
de 11 à 13 ppm en poids de Pb,
de 31 à 39 ppm en poids de Ni,
de 14 à 18 ppm en poids de Co,
de 27 à 33 ppm en poids de Mo,
de 52 à 64 ppm en poids de Cr,
moins de 4 ppm en poids d'iode,
moins de 6 ppm en poids de bore et
moins de 0,6 ppm en poids de mercure.

9. Engrais conforme à la revendication 8, caractérisé en ce qu'il contient les oligoéléments métalliques et métalloïdes suivants :
environ 31 ppm en poids de Cu,
environ 79 ppm en poids de Zn,
environ 12 ppm en poids de Pb,
environ 35 ppm en poids de Ni,
environ 16 ppm en poids de Co,
environ 30 ppm en poids de Mo,
environ 58 ppm en poids de Cr,
moins de 1 ppm en poids d'iode,
moins de 2 ppm en poids de bore, et
moins de 0,2 ppm en poids de mercure.

10. Engrais conforme à la revendication 1, caractérisé en ce que les teneurs en les principaux oxydes, rapportées au poids total de l'engrais, sont les suivantes :
14,15 % en poids de dioxyde de carbone,
22,72 % en poids de dioxyde de silicium,
5,23 % en poids d'oxyde d'aluminium,
2,10 % en poids de ferrite (Fe₂O₃),
0,20 % en poids de dioxyde de titane,
20,25 % en poids d'oxyde de calcium,
1,73 % en poids d'oxyde de magnésium,
0,19 % en poids d'oxyde de manganèse (MnO),
0,95 % en poids d'oxyde de potassium,
0,68 % en poids d'oxyde de sodium et
0,13 % en poids d'oxyde de phosphore (P₂O₅),
et en ce qu'il contient en outre des sulfates insolubles, des oligoéléments et des substances humiques.

11. Engrais conforme à la revendication 1, caractérisé en ce qu'il contient en outre des graines de plantes.

12. Engrais conforme à la revendication 11, caractérisé en ce que les graines de plantes sont présentes de préférence dans les noyaux des granules d'engrais en une quantité telle que chaque granule d'engrais contient en moyenne de 3 à 10, de préférence de 4 à 6 graines.

13. Procédé de préparation de l'engrais conforme à l'une des revendications 1 à 12, caractérisé
a) en ce que l'on broie le composant minéral, de préférence de la roche volcanique, jusqu'à une taille de particules de 1 à 20 µm, de préférence de 2 à 10 µm,
b) en ce que l'on broie le composant organique, de préférence de la lignite du tertiaire, jusqu'à une taille de particules allant de 10 à 70 µm, de préférence de 20 à 50 µm,
c) en ce que l'on mélange le produit obtenu dans l'étape a) et le produit obtenu dans l'étape b) en un rapport en poids d'environ (50 - 70) / (50 - 30) , de préférence en un rapport d'environ 60/40, dans un tambour mélangeur à température ambiante,
d) en ce que l'on transfère le produit obtenu dans l'étape c) dans un tambour de granulation ou de pelletisation ou dans une cuve de granulation ou de pelletisation surmontée d'un tamis, et en ce que l'on alimente le dispositif de granulation ou de pelletisation tournant à une vitesse d'environ 30 à 40 tours par minute (tpm), de préférence d'environ 30 tpm, sur une période d'environ 30 minutes, de préférence d'environ 5 minutes, avec 5 à 30 % en poids, de préférence 8 à 10 % en poids, rapporté à la charge d'engrais obtenu dans l'étape c), d'engrais calcaire naturel en poudre, de préférence du calcaire coquillier en poudre broyé jusqu'à une taille de particules de 10 à 20 µm, de préférence de 15 µm,
e) en ce que l'on entrepose les granules ainsi obtenus présentant, après recyclage des particules de trop grande taille vers le tambour mélangeur, une taille de particules de 5 à 15 mm pendant 4 à 5 heures sur des gros tamis afin d'en éliminer l'humidité, et en ce qu'on les conditionne ensuite dans des sacs, ou
f) en ce que l'on transfère les granules obtenus dans l'étape d) dans un tambour de séchage traversé par un courant d'air chaud, tout en recyclant les particules de trop grande taille vers le tambour mélangeur, et en ce que l'on sèche les granules ayant une taille de particules de 5 à 15 mm pendant 2 à 20 minutes dans le tambour de séchage à une température d'environ 45 à 50°C et a une vitesse de 30 à 40 tpm, pour les conditionner ensuite dans des sacs.

14. Procédé conforme à la revendication 13, caractérisé en ce que le mélange dans le tambour mélangeur de l'étape c) se fait pendant 1 minute à environ 500 tpm puis pendant environ 1 à 10 minutes à environ 200 à 500 tpm, les deux étapes se déroulant à température ambiante.

15. Procédé conforme à la revendication 13, caractérisé en ce que l'on ajoute pendant l'étape c) et/ou d) des graines de plantes ou un mélange de graines de plantes en une quantité telle que chaque granule d'engrais final contient en moyenne de 3 à 10, de préférence de 4 à 6 graines.
